# EUROPEAN PATENT APPLICATION

(11) **EP 2 481 761 A1**
(43) Date of publication of application: **01.08.2012**
(21) Application number: 12166023.7
(22) Date of filing: 22.08.2007
(51) Int. Cl.: C08F 8/20

(54) **Terminating Bromination Of Styrenic Polymer In A Bromination Reaction Mixture**

(30) Priority: 22.08.2006 US 839336 P
(62) Divisional of application: 07814340.1
(71) Applicant: Albemarle Corporation, Baton Rouge, LA 70801-1765 (US)
(72) Inventor: Balhoff, John, Baton Rouge; LA 70820, LA Louisiana (US); Kolich, Charles, Baton Rouge, LA 70910, LA Louisiana (US)
(74) Representative: UEXKÜLL & STOLBERG

(57) **Abstract**

A brominated styrenic polymer reaction mixture containing at least (i) brominated styrenic polymer, (ii) bromination reaction solvent, (iii) hydrogen bromide, and (iv) Lewis acid bromination catalyst, and an aqueous medium in an amount sufficient to deactivate the Lewis acid catalyst but insufficient to form a separate continuous liquid phase in the resultant mixture are mixed together to terminate bromination. The advantages of using such small amounts of aqueous medium, as well as various follow on procedures are described.

## Description

### BACKGROUND

Brominated styrenic polymers are produced by brominating a styrenic polymer in a suitable organic solvent containing a Lewis acid bromination catalyst. The common method for recovering the brominated styrenic polymer from the liquid phase of the bromination reaction mixture in which they were formed involves deactivating the catalyst with an aqueous quenching medium, separating the brominated polymer-containing organic phase from the aqueous phase, stripping the organic phase of its solvent usually by pouring the organic phase into boiling water whereby the brominated polymer is precipitated, recovering the precipitated brominated polymer by a liquid-solids separation technique such as filtration or centrifugation, and drying the resultant finely-divided brominated styrenic polymer. When practiced on an industrial scale, such procedures require use of large amounts of water which in turn necessitates discharge of waste waters to the environment. Also, the use of the aqueous quenching medium results in the need to immediately remove the high heat of dilution of hydrogen bromide co-product contained in the reaction mixture. This is an especially difficult problem when the bromination reaction is conducted under pressure in a closed reaction system whereby the hydrogen bromide co-product serves as a co-solvent in the process. Such a process is described in commonly-owned copending application no. 60/753,285, filed December 21, 2005.

It would be highly advantageous if a way could be found for accomplishing termination of the bromination and recovery of the brominated styrenic polymer more efficiently, at lower cost, and without requiring use of such large quantities of water and the various separation steps involved in the operations.

### BRIEF SUMMARY OF THE INVENTION

Pursuant to this invention complex procedures such as referred to above can be replaced by much simpler procedures involving less consumption of water, less discharge of waste water, and less phase separations than are usually employed in commercial scale plant operations for producing brominated styrenic polymers. Moreover, the invention can be practiced either on a batch process or as a continuous process.

Thus in one of the embodiments of this invention a brominated styrenic polymer reaction mixture containing at least brominated styrenic polymer, bromination reaction solvent, hydrogen bromide, and Lewis acid bromination catalyst is treated by a process comprising mixing with such reaction mixture an amount of water sufficient to deactivate the Lewis acid catalyst and terminate the aromatic bromination reaction but insufficient to form a separate aqueous phase. This embodiment of the invention enables use of smaller vessels in which to conduct the catalyst deactivation. Further, this embodiment eliminates the need to immediately remove the high heat of dilution of hydrogen bromide as is required in conventional plant-scale operations involving quenching of the reaction mixture with an aqueous quenching composition.

Another embodiment of this invention is a process comprising (A) brominating styrenic polymer in an organic solvent in the presence of a Lewis acid bromination catalyst to form a reaction mixture having an organic liquid phase containing dissolved brominated styrenic polymer, and (B) treating such reaction mixture with an aqueous medium in an amount at least sufficient to deactivate the bromination catalyst but insufficient to form a separate continuous liquid phase in the resultant treated reaction mixture.

These and other embodiments and features of this invention will become still further apparent from ensuing description and appended claims.

### FURTHER DETAILED DESCRIPTION

There are various processes that can be used for preparing brominated styrenic polymers. See, for example, U.S. Pat. Nos. 5,677,390, 5,686,538, 5,767,203, 5,852,131, 5,852,132, 5,916,978, 6,113,381, 6,207,765, 6,232,393, 6,232,408, 6,235,831, 6,235,844, 6,326,439, and 6,521,714. The present invention is applicable to any styrenic polymer bromination process that forms a reaction mixture comprising (i) brominated styrenic polymer, (ii) bromination reaction solvent, (iii) hydrogen bromide, and (iv) Lewis acid bromination catalyst. The bromine content of the brominated styrenic polymer in such reaction mixtures can vary. Typically, however, the bromine content of the brominated styrenic polymer in the reaction mixture will be at least 50 wt%, preferably at least 60 wt%, more preferably at least 67 wt%, and still more preferably the bromine content will be in the range of about 68 to about 71 wt%. The amount of brominated styrenic polymer in the reaction mixture can also vary. Typically, the reaction mixture will contain about 10 wt% or more, and preferably 25 wt% or more.

The styrenic polymer utilized in the bromination forming the bromination reaction mixture is preferably an anionic styrenic polymer, *i.e.*, a styrenic polymer produced using an anionic polymerization initiator such as a lithium alkyl. However, reaction mixtures in which a free radical styrenic polymer, *i.e.,* a styrenic polymer formed by a free radical polymerization initiator such as peroxide, hydroperoxide orpersulphatehas been brominated are highly suitable reaction mixtures for use in the practice of this invention. In this connection, the terms "brominated styrenic polymer" and "brominated polystyrene" as used in the specification and in the claims hereof refer to a brominated polymer produced by bromination of a pre-existing styrenic polymer such as polystyrene or a copolymer of styrene and at least one other vinyl aromatic monomer, as distinguished from an oligomer or polymer produced by oligomerization or polymerization of one or more brominated styrenic monomers, the properties of the latter oligomers or polymers typically being considerably different from brominated polystyrene in a number of respects. Also as used herein, including the claims, the term "anionic styrenic polymer" or "anionic polystyrene", terms commonly used by persons skilled in the art, denotes that the polymer referred to has been produced by use of an anionic polymerization initiator, such as a lithium alkyl. The terms "brominated styrenic polymer" and "brominated polystyrene" include and are generic to the terms "brominated anionic styrenic polymer" or "brominated anionic polystyrene". These generic terms also include, for example, brominated styrenic polymers produced by bromination of styrenic polymers or polystyrene made by free radical polymerization.

The styrenic polymer present in the reaction mixture is one or more homopolymers and/or copolymers of one or more vinyl aromatic monomers. Preferred vinyl aromatic monomers have the formula:

H₂C=CR-Ar

wherein R is a hydrogen atom or an alkyl group having from 1 to 4 carbon atoms and Ar is an aromatic group (including alkyl-ring substituted aromatic groups) of from 6 to 10 carbon atoms. Examples of such monomers are styrene, *alpha-*methylstyrene, *ortho-*methylstyrene*, meta*-methylstyrene, *para*-methylstyrene, *para*-ethylstyrene, isopropenyltoluene, vinylnaphthalene, isopropenylnaphthalene, vinylbiphenyl, vinylanthracene, the dimethylstyrenes, and tert-butylstyrene. Polystyrene is the preferred reactant. When the brominated styrenic polymer is made by bromination of a copolymer of two or more vinyl aromatic monomers, it is preferred that styrene be one of the monomers and that styrene comprise at least 50 weight percent and preferably at least about 80 weight percent of the copolymerizable vinyl aromatic monomers. The terms "vinylaromatic" and "styrenic" in connection with monomer(s) or polymer(s) are used interchangeably herein.

The aromatic pendant constituents of the styrenic polymer to be brominated can be alkyl substituted or substituted by bromine or chlorine atoms, but preferably will not be so substituted. Typically, anionic styrenic polymers used to produce the brominated anionic styrenic polymers will have a GPC weight average molecular weight (M_{w}) in the range of about 2000 to about 200,000, preferably in the range of about 3000 to about 10,000, and more preferably in the range of about 3000 to about 7000. The polydispersity of such anionic styrenic polymers will typically be in the range of between I and about 4, and more preferably in the range of between 1 and about 2. Typically, styrenic polymers produced by free radical polymerization that are used to produce the brominated styrenic polymers will have a GPC weight average molecular weight (M_{w}) in the range of about 30,000 to about 500,000, preferably in the range of about 50,000 to about 300,000, and more preferably in the range of about 150,000 to about 250,000. The polydispersity of such styrenic polymers produced by free radical polymerization will typically be in the range of between 1 and about 10. All of the foregoing M_{w} and polydispersity values are based on gel permeation chromatography (GPC) techniques.

Although any suitable standard method for determining molecular weight and polydispersity can be used, in any doubtful case use of the following procedure is recommended: Molecular weight values of styrenic polymers are obtained by GPC using a Waters model 510 HPLC pump and, as detectors, a Waters Refractive Index Detector, Model 410 and a Precision Detector Light Scattering Detector, Model PD2000, or equivalent equipment. The columns are Waters, µStyragel, 500Å, 10,000Å and 100,000 Å. The autosampler is a Shimadzu, Model Sil 9A. A polystyrene standard (M_{w} = 185,000) is routinely used to verify the accuracy of the light scattering data. The solvent used is tetrahydrofuran, HPLC grade. The test procedure used entails dissolving 0.015-0.020 g of sample in 10 mL of THF. An aliquot of this solution is filtered and 50 µL is injected on the columns. The separation is analyzed using software provided by Precision Detectors for the PD 2000 Light Scattering Detector. The instrument provides results in terms of weight average molecular weight and also in terms of number average molecular weight. Thus, to obtain a value for polydispersity, the value for weight average molecular weight is divided by the value for number average molecular weight.

The bromination reaction solvent present in the reaction mixture treated pursuant to this invention can be any suitable bromination solvent. Preferred solvents are halogenated hydrocarbons, particularly those which contain chlorine and/or bromine atoms in the molecule. A few non-limiting examples of such solvent include dichloromethane, dibromomethane, bromochloromethane, bromotrichloromethane, chloroform, carbon tetrachloride, 1,2-dibromoethane, 1,1-dibromoethane, 1-bromo-2-chloroethane, 1,2-dichloroethane, 1,1,2-tribromoethane, 1,1,2,2-tetrabromoethane, 1,2-dibromopropane, 1-bromo-3-chloropropane, 1-bromobutane, 2-bromobutane, 2-bromo-2-methylpropane, 1-bromopentane, 1,5-dibromopentane, 1-bromo-2-methylbutane, 1-bromohexane, 1-bromoheptane, bromocyclohexane, and liquid isomers, homologs, or analogs thereof. Liquid mixtures of two or more such compounds can be used. Bromochloromethane is a particularly preferred solvent.

Any of a variety of Lewis acid catalysts can be used as the bromination catalyst, and thus, the reaction mixture treated pursuant to this invention will typically contain such catalyst or residues thereof formed during the course of the bromination reaction. Among suitable Lewis acid catalysts for this use include AlCl₃, FeCl₃ AlBr₃, FeBr₃, ZrCl₄, ZrBr₄, and the like. Fe or Al may be used to form Lewis acid catalysts by simply adding them to the reaction system. Mixtures of catalysts can also be used. Once the catalyst has been added to the reaction system, it may undergo some reaction without significant loss of catalytic activity, *e.g.,* AlCl₃ may convert at least to some extent, if not entirely, to AlBr₃. The more preferred catalysts are the aluminum based catalysts. Of these, more preferred are the aluminum halides in which the halogen atoms are bromine and/or chlorine atoms. If bromine chloride is used as the brominating agent, the Lewis acid used can be a weak Lewis acid catalyst such an antimony trichloride or antimony tribromide. When elemental bromine is used as the brominating agent, it is desirable to utilize a relatively strong Lewis acid catalyst as the bromination catalyst, such as aluminum chloride, aluminum bromide, ferric chloride, or the like.

As noted above, one of the embodiments of this invention involves mixing with a brominated styrenic polymer reaction mixture containing at least (i) brominated styrenic polymer, (ii) bromination reaction solvent, (iii) hydrogen bromide, and (iv) Lewis acid bromination catalyst, an amount of aqueous medium, preferably water, sufficient to deactivate the Lewis acid catalyst but insufficient to form a separate continuous liquid phase in the resultant mixture. By adding a minimal amount of water (enough to terminate the bromination reaction but not form two phases) the reaction is effectively stopped while retaining a single phase. Such process provides the opportunity to feed a single phase to a continuous wash/phase separation process while utilizing a smaller feed vessel that does not contain a large water phase. The heat of dilution of hydrogen bromide present in the reaction mixture can be removed continuously with smaller equipment along with minimized phase separation equipment. The equipment cost is less and the operation is simpler since it can be conducted on a continuous basis. For convenience, the above embodiment is sometimes referred to hereinafter as the catalyst deactivation step.

Aqueous media which can be used in the catalyst deactivation step include aqueous solutions of inorganic bases which do not adversely affect the properties or characteristics of the reaction mixture or the components thereof, such as, for example, very dilute sodium hydroxide, ammonium hydroxide, sodium sulfite, sodium bisulfite and sodium glyconate solutions. The preferred aqueous medium is water itself.

Typically, the amount of aqueous medium or water used in the catalyst deactivation step will be in the range of about 3 to about 10 moles of water per mole of Lewis acid catalyst charged to the reactor in conducting the bromination that formed the reaction mixture. The length of time this treated reaction mixture is agitated, shaken, stirred, or otherwise physically mixed will vary depending on such factors as the amount of water used, the scale of the operation, and the rate of agitation used, but typically a mixing period in the range of about 5 to about 30 minutes usually will be found sufficient at ordinary mixing rates. After completing the catalyst deactivation step, various follow-on procedures can be used in order to isolate and recover the brominated styrenic polymer and the bromination solvent as separate entities.

One preferred follow-on procedure is to wash the resultant above-treated reaction mixture one or more times with additional water and/or an aqueous washing composition (*e.g.,* dilute aqueous caustic), each time separating and discarding the aqueous phase leaving an organic phase composed predominately of the brominated styrenic polymer and organic solvent. Preferably, such washing is conducted in a separate vessel from that used in the initial mixing of water. If more than one wash is used, usually the final wash is a water wash. After a phase cut to separate the organic phase of brominated styrenic polymer in organic solvent from the aqueous phase, some water typically remains in such organic phase. To remove such water the "wet" organic phase (*i.e.,* organic phase which contains along with the brominated styrenic polymer, some residual amount of water, *e.g.*, ca. 1500 ppm of water), is preferably passed through a coalescent to effect separation of at least a large portion of the free water, *e.g.*, to a level of ca. 300 ppm or less of water).

The brominated styrenic polymer can be recovered from the organic phase by introducing the washed organic phase into boiling or near boiling water whereby the solvent is boiled off, condensed, and recovered for reuse. Preferably, however, the washed and dried organic phase containing at least about 40 wt% of dissolved brominated styrenic polymer is introduced into the inlet of an operating devolatilization extruder whereby the solvent is released from organic phase by application of heat and reduced pressure while concurrently a melt or flow of brominated styrenic polymer is formed in, and released separately from, the devolatilization extruder. If the resultant "dried" solution of brominated styrenic polymer in the organic solvent contains less than about 40 wt% of brominated styrenic polymer, such solution is preferably subjected to distillation, more preferably a flash distillation, to remove organic solvent as a collectable vapor phase along with any water retained by the polymer solution. In this way a more concentrated essentially anhydrous organic solution containing at least about 50 wt% of brominated styrenic polymer is formed. Such more highly concentrated solution is ideally suited for use as the feed to the devolatilization extruder.

The technology for coalescing filtration, including coalescing filtration for separating water from organic liquid systems, is well known and reported in the literature, and systems for separating water from organic liquid systems are available from various commercial suppliers. Suitable filter media for effecting such separations include fiberglass, ceramics, and sand. The use of a bed of sand is a preferred medium for use in operations in which coalescing filtration is to be employed.

When utilizing an operation involving a devolatilization extruder, the melt or flow from the extruder can be cooled or can be allowed to cool, and thereby solidify, or the melt or flow can be utilized in a pelletizing operation. A few ways of recovering the brominated styrenic polymer from the devolatilization extruder for recovery as a solid which can subsequently be broken up in a mill or like operation are as follows:

A) A process for recovering brominated styrenic polymer from admixture in a vaporizable organic solvent, which process comprises processing an admixture of at least extrudable viscosity comprised of brominated styrenic polymer typically having a bromine content of at least about 50 wt%, preferably at least about 60 wt%, and more preferably at least about 67 wt%, and a vaporizable organic solvent, in a devolatilization extruder to form a melt or flow of such brominated styrenic polymer and a vapor phase comprised of vaporizable organic solvent, recovering from the devolatilization extruder such melt or flow of brominated styrenic polymer while in the form of a melt or flow, and allowing or causing such melt or flow to solidify. Preferably, the melt or flow of such brominated styrenic polymer that has exited from the outlet portion of the devolatilization extruder contains an average of less than about 10,000 ppm (wt/wt), more preferably less than about 5000 ppm (wt/wt), and still more preferably less than about 1000 ppm (wt/wt) of the organic solvent in steady-state operation of the devolatilization extruder. Preferably, the vapor phase is also recovered.

B) A process for recovering brominated styrenic polymer from admixture in a vaporizable organic solvent, which process comprises
> continuously introducing into the inlet portion of an operating devolatilization extruder, an admixture of extrudable viscosity, such admixture comprising brominated styrenic polymer typically having a bromine content of at least about 50 wt%, preferably at least about 60 wt%, and more preferably at least about 67 wt%, and a vaporizable organic solvent, the extruder having an inlet portion and a polymer melt or polymer flow outlet portion and at least two sections that can be operated (a) at temperatures that differ from each other, and (b) underpressures that differ from each other, one of the at least two sections being disposed upstream from the other of the at least two sections, the devolatilization extruder having vapor collecting apparatus adapted to collect volatiles formed in these at least two sections; and
> operating the section disposed downstream at higher temperature and lower pressure conditions than the temperature and pressure conditions of the section disposed upstream, so that (a) a flow or melt of the polymer is formed within the devolatilization extruder and released from the polymer melt or polymer flow outlet, and (b) volatiles composed predominately of the solvent released from the polymer in the at least two sections can be collected by the vapor collecting apparatus, the melt or flow of such brominated styrenic polymer that has exited from the outlet portion of the devolatilization extruder containing an average of less than about 10,000 ppm (wt/wt), preferably less than about 5000 ppm (wt/wt), and still more preferably less than about 1000 ppm (wt/wt) of the organic solvent in steady-state operation of the devolatilization extruder.

C) A process for recovering brominated styrenic polymer from admixture with a vaporizable solvent, preferably a vaporizable halogenated solvent, which admixture is an admixture of less than extrudable viscosity, such as a solution containing in the range of about 15 to about 40 wt% of brominated anionic styrenic polymer (preferably brominated anionic polystyrene) having a GPC weight average molecular weight in the range of about 2000 to about 3 0,000, preferably in the range of about 2000 to about 10,000, and more preferably in the range of about 3000 to about 7000, such process comprising:
> concentrating or converting such admixture into an admixture of extrudable viscosity by distillation, preferably by flash distillation; and
> utilizing such admixture of extrudable viscosity as the feed in the process as described in A) or B) above.

A few illustrative ways of converting the melt or flow from the devolatilization extruder directly into pelletized brominated styrenic polymer are as follows:

1) A process for producing pelletized brominated styrenic polymer from admixture in a vaporizable organic solvent, which process comprises processing an admixture of at least extrudable viscosity comprised of brominated styrenic polymer typically having a bromine content of at least about 50 wt%, preferably at least about 60 wt%, and more preferably at least about 67 wt%, and a vaporizable organic solvent, in a devolatilization extruder to form a melt or flow of such brominated styrenic polymer and a vapor phase comprised of vaporizable organic solvent, recovering from the devolatilization extruder such melt or flow of brominated styrenic polymer while in the form of a melt or flow, and converting such melt or flow into solid pellets of brominated styrenic polymer.

2) A process for producing pelletized brominated styrenic polymer from solution in a vaporizable solvent, which process comprises converting in a devolatilization extruder an admixture of brominated styrenic polymer typically having a bromine content of at least about 50 wt%, preferably at least about 60 wt%, and more preferably at least about 67 wt%, and a vaporizable organic solvent into a brominated styrenic polymer melt or flow and a separate vapor phase comprised predominately of vaporizable organic solvent, allowing or causing the melt or flow of brominated styrenic polymer while in the form of a melt or flow to pass from the devolatilization extruder through a die thereby producing emerging strands of brominated styrenic polymer melt or flow, allowing or causing such strands to solidify, and subdividing the strands into solidified pellets of brominated styrenic polymer.

3) A process for producing pelletized brominated styrenic polymers from a solution in a vaporizable solvent, which process comprises:
> converting in a devolatilization extruder, an admixture of brominated styrenic polymer, preferably an admixture of brominated anionic styrenic polymer, and a vaporizable organic solvent into a melt or flow of brominated styrenic polymer, preferably a melt or flow of brominated anionic styrenic polymer, and a separate vapor phase of the solvent;
> extruding the melt or polymer flow from the devolatilization extruder through a die to produce traveling strand(s) of extruded polymer melt or polymer flow;
> enabling and/or causing such traveling strand(s) to solidify and be broken, subdivided, or otherwise converted into pellets of the brominated styrenic polymer; and
> subjecting the pellets to size classification to remove and recover from such product (a) oversized particles, if any, and (b) fines, if any, that may be present in such product.

The operation of a devolatilization extruder typically involves the following steps:
> continuously introducing into the liquids inlet portion of an operating devolatilization extruder, an admixture of extrudable viscosity, such admixture comprising brominated styrenic polymer and a vaporizable organic solvent, the extruder having a liquids inlet portion and a polymer melt or polymer flow outlet portion and at least two sections that can be operated (a) at temperatures that differ from each other, and (b) under pressures that differ from each other, one of the at least two sections being disposed upstream from the other of the at least two sections, the devolatilization extruder having vapor collecting apparatus adapted to collect volatiles formed in these at least two sections; and
> operating the section disposed downstream at higher temperature and lower pressure conditions than the temperature and pressure conditions of the section disposed upstream, so that (a) a flow or melt of the polymer is formed within the devolatilization extruder and released from the polymer melt or polymer flow outlet, and (b) volatiles composed predominately of the solvent released from the polymer in such at least two sections can be, and preferably are, collected by such vapor collecting apparatus, the melt or flow of such brominated styrenic polymer that has exited from the outlet portion of the devolatilization extruder containing an average of less than about 10,000 ppm (wt/wt) of the organic solvent in steady-state operation.

In an especially preferred embodiment of this invention a process is provided comprising conducting the bromination of a styrenic polymer in a liquid phase reaction mixture under superatmospheric pressure in a closed reaction system so that gaseous hydrogen halide (HX) coproduct is not released from the closed reaction system separately and apart from such reaction mixture until the reaction has been terminated by mixing with the reaction mixture an amount of an aqueous medium sufficient to deactivate the Lewis acid catalyst but insufficient to form a separate continuous liquid phase in the resultant mixture. The resultant continuous liquid phase, which remains enriched in coproduct hydrogen bromide, is then pumped into a separate vessel in which the liquid phase is washed with water or other suitable aqueous medium, During this washing step, the hydrogen bromide is separated either as hydrobromic acid or as a bromide salt, depending upon the make-up of the aqueous washing systems. After drying the washed liquid phase, it is preferably introduced into a devolatilization extruder for processing as described above.

For further details concerning the above follow on operations, reference may be had to commonly owned copending patent application ApplicationNo. 60/832,184, filed July 20, 2006.

A manner of practicing this invention is illustrated by the following Example. In this Example, an overall batch-type bromination and recovery operation is described. It will be understood and appreciated that the practice of this invention does not require all of the steps given in this Example and that it is preferable to carry out at least the catalyst deactivation on a continuous basis. Also, in the Example, the solvent was separated from the brominated anionic polystyrene by use of hot aqueous flash distillation of solvent rather than by use of a preferred operation involving devolatilization extrusion.

### EXAMPLE

A batch bromination was carried out using an anionic polystyrene having a number average molecular weight of 3200 and a weight average molecular weight of 3300. A 5.44 g (20.4 mmol) portion of aluminum bromide (Aldrich) was dissolved in 199.8 g of dry (<15 ppm water) bromochloromethane (BCM) in a 1-L, 5-necked, jacketed, glass reaction flask cooled to -4°C by a circulating glycol bath. The reaction flask having a flush-mount Teflon polymer bottom valve was equipped with an overhead air stirrer and Teflon polymer banana-blade paddle, Friedrich's condenser (glycol cooled), and thermowell. A constant flow of dry nitrogen was maintained on the vent line from the condenser to assist in moving exit gases from the flask to a caustic scrubber. A 500.0 g portion (323 mL) of a 30.0 wt% solution (150.0 g APS, 1.44/n mol) of the anionic polystyrene (APS) in dry BCM was charged to a 500-mL Erlenmeyer flask in a dry box. The flask was then set up to pump the APS solution from the Erlenmeyer flask to a jacketed, glycol-cooled glass mixing tee mounted on the reaction flask. A solution (323 mL) of BCM (198.9 g) and bromine (690.4 g, 4.320 moles, 3.00 equivalents) was charged to a second 500-mL Erlenmeyer flask and set up to pump the bromine to the same mixing tee as the APS solution. A single pump motor (Ismatec peristaltic pump, Cole-Parmer SY-78017-00) having two pump heads was used to deliver equal volumes of the APS and bromine solutions to the mixing tee. Both streams were cooled separately by the mixer before combining at the bottom of the apparatus and dropping into the bromination flask. The reaction mixture was protected from photo-initiated aliphatic bromination by turning off hood lights and wrapping the flask and mixing tee with aluminum foil. Both feeds were started at the same time and were both completed in 85 min. A rinse of 100 g of dry BCM was used for the APS solution feed system to assure complete transfer of the polymer to the reaction flask while nitrogen was flushed through the bromine feed system to give quantitative transfer of the bromine. The reaction temperature was maintained at -4°C to 0°C throughout the addition and subsequent 15 min cook period (with nitrogen purge of the reactor overhead). Pursuant to an embodiment of this invention, the catalyst in the red-brown reaction mixture was deactivated at -4°C by addition of 3.01 g of water (167 mmol, water to AlBr₃ mole ratio of 8) to give a light brown cloudy solution that showed no evidence of a separate aqueous phase after standing for 5 min. Addition of more water to give a total of 8.7 g of water (483 mmol, water to AlBr₃ mole ratio of 24) resulted in formation of a separate upper aqueous phase after brief stirring and then standing for 5 min. The lower organic phase (1279.9 g) was separated from the aqueous phase (4.4 g), and then washed with water, dilute caustic, and finally water. The product was recovered from the washed organic phase (1198.3 g) by addition to vigorously stirred hot (98 ° C) water. The solvent distilled from the hot water leaving a slurry of the finely divided solid brominated polystyrene product in water. After suction filtering the slurry, the white solid was rinsed with water (3 x 1L) and dried to a constant weight of 471.9 g (95% yield) in an oven (120°C) under a nitrogen purge. The product gave the following analyses: 70.3 wt% Br; 4.37 ΔE solution color in chlorobenzene (10.0 wt%); 180 ppm thermal HBr evolution at 320°C/15 min under nitrogen; 22.49 ATE solution color in chlorobenzene (10.0 wt%) after 15 min at 320°C under nitrogen; 13,500 M_{w} and 11,000 Mₙ by GPC; and 9.5 g/10 min melt flow index measured at 235°C with 2.16 kg load.

Components referred to by chemical name or formula anywhere in the specification or claims hereof, whether referred to in the singular or plural, are identified as they exist prior to coming into contact with another substance referred to by chemical name or chemical type (*e.g.*, another component, a solvent, or *etc.*)*.* It matters not what preliminary chemical changes, transformations and/or reactions, if any, take place in the resulting mixture or solution as such changes, transformations, and/or reactions are the natural result of bringing the specified components together under the conditions called for pursuant to this disclosure. Thus the components are identified as ingredients to be brought together in connection with performing a desired operation or in forming a desired composition. Also, even though the claims hereinafter may refer to substances, components and/or ingredients in the present tense ("comprises", "is", *etc.),* the reference is to the substance, component or ingredient as it existed at the time just before it was first contacted, blended or mixed with one or more other substances, components and/or ingredients in accordance with the present disclosure. The fact that a substance, component or ingredient may have lost its original identity through a chemical reaction or transformation during the course of contacting, blending or mixing operations, if conducted in accordance with this disclosure and with ordinary skill of a chemist, is thus of no practical concern.

Each and every patent or publication referred to in any portion of this specification is incorporated *in toto* into this disclosure by reference, as if fully set forth herein.

This invention is susceptible to considerable variation in its practice. Therefore the foregoing description is not intended to limit, and should not be construed as limiting, the invention to the particular exemplifications presented hereinabove.

## Claims

1. A process which comprises mixing with a brominated styrenic polymer reaction mixture containing at least (i) brominated styrenic polymer, (ii) bromination reaction solvent, (iii) hydrogen bromide, and (iv) Lewis acid bromination catalyst, an amount of aqueous medium sufficient to deactivate the Lewis acid catalyst but insufficient to form a separate continuous liquid phase in the resultant mixture.

2. A process as in Claim 1 wherein said brominated styrenic polymer is a brominated anionic styrenic polymer, wherein said bromination reaction solvent comprises a halogenated hydrocarbon solvent, and wherein said Lewis acid catalyst comprises an aluminum halide in which at least one halogen atom thereof is a chlorine or bromine atom.

3. A process as in Claim 1 wherein said aqueous medium is water in the liquid state.

4. A process as in any of Claims 1-3 wherein said amount of aqueous medium is in the range of about 3 to about 10 moles of water per mole of Lewis acid catalyst charged to the reactor in conducting the bromination that formed said reaction mixture.

5. A process as in Claim 1 further comprising washing said resultant mixture at least once and thereafter recovering therefrom the brominated styrenic polymer.

6. A process as in Claim 5 wherein the brominated styrenic polymer is recovered by devolatilization extrusion utilizing a devolatilization extruder.

7. A process as in Claims 5 or 6 wherein said brominated styrenic polymer is a brominated anionic styrenic polymer, wherein said bromination reaction solvent comprises a halogenated hydrocarbon solvent, and wherein said Lewis acid catalyst comprises an aluminum halide in which at least one halogen atom thereof is a chlorine or bromine atom.

8. A process comprising (A) brominating styrenic polymer in an organic solvent in the presence of a Lewis acid bromination catalyst to form a reaction mixture having an organic liquid phase containing dissolved brominated styrenic polymer, and (B) treating said reaction mixture with an aqueous medium in an amount at least sufficient to deactivate the bromination catalyst but insufficient to form a separate continuous liquid phase in the resultant treated reaction mixture.

9. A process as in Claim 8 wherein the organic solvent and the organic liquid phase are comprised of a liquid halogenated organic solvent.

10. A process as in Claim 9 wherein the liquid halogenated organic solvent contains at least one chlorine atom or at least one bromine atom, or both.

11. A process as in Claim 9 wherein the liquid halogenated organic solvent consists essentially of bromochloromethane.

12. A process as in any of Claims 8-11 wherein the styrenic polymer brominated in (A) is an anionic styrenic polymer, and wherein the aqueous medium is water in the liquid state.

13. A process as in Claim 12 wherein the anionic styrenic polymer brominated in (A) is anionic polystyrene.

14. A process as in Claim 8 wherein the bromination is conducted in a liquid phase reaction mixture under superatmospheric pressure in a closed reaction system so that gaseous hydrogen halide coproduct is not released from the closed reaction system separately and apart from such reaction mixture until the reaction has been terminated by mixing with the reaction mixture an amount of an aqueous medium sufficient to deactivate the Lewis acid catalyst but insufficient to form a separate continuous liquid phase in the resultant mixture.

15. A process as in Claim 14 wherein said brominated styrenic polymer is a brominated anionic styrenic polymer, wherein said bromination reaction solvent comprises a halogenated hydrocarbon solvent, and wherein said Lewis acid catalyst comprises an aluminum halide in which at least one halogen atom thereof is a chlorine or bromine atom.
